# EUROPEAN PATENT SPECIFICATION

(11) **EP 3 559 061 B1**
(45) Date of publication and mention of the grant of the patent: **09.06.2021**
(21) Application number: 17885082.2
(22) Date of filing: 21.12.2017
(51) Int. Cl.: C08F 236/10, C08L 25/10, C08L 21/00, C08F 8/42, C08F 8/04, C08F 4/70, C08K 3/04, C08K 3/06, C08K 3/36, B60C 1/00, C08C 19/02, C08C 19/25, C08C 19/44, C08F 236/06

(54) **HIGH STRENGTH HYDROGENATED POLYMERS, AND RUBBER COMPOSITIONS INCORPORATING SAME**
HOCHFESTE HYDRIERTE POLYMERE UND KAUTSCHUKZUSAMMENSETZUNGEN DAMIT
POLYMÈRES HYDROGÉNÉS À HAUTE RÉSISTANCE, ET COMPOSITIONS DE CAOUTCHOUC LES INCORPORANT

(30) Priority: 21.12.2016 US 201662437121 P
(43) Date of publication of application: 30.10.2019
(73) Proprietor: Bridgestone Corporation, Tokyo 104-8340 (JP)
(72) Inventor: BEAULIEU, Michael R., Bolton, Massachusetts 01740 (US); YUKIMURA, Noriaki, Chuo-ku Tokyo 104-8340 (US); QIN, Zengquan, Nashville, Tennessee 37211 (US)
(74) Representative: Oxley, Robin John George
(86) International application number: PCT/US2017/067774
(87) International publication number: WO 2018/119168

(56) References cited:
- EP-A1- 2 272 878
- EP-A1- 2 963 087
- EP-A2- 1 245 585
- EP-A2- 1 293 535
- WO-A1-2016/039005
- JP-A- H10 218 920
- JP-A- S62 283 105
- KR-A- 20000 012 973
- US-A1- 2005 171 276
- US-A1- 2009 062 434

## Description

### TECHNICAL FIELD

Embodiments of the present disclosure are generally related to hydrogenated copolymers, and are specifically related to hydrogenated, functionalized copolymers having improved mechanical strength.

### BACKGROUND

Rubber tires employing tire treads have been used for more than a century. Because the tire tread provides the interface between the tire and the road surface, the tire tread performance correlates to the drivability of the vehicle. Accordingly, there is a continual need for improved rubber compositions which increase the performance of the tire treads.

### SUMMARY

Embodiments of the present disclosure are directed to rubber compositions comprising hydrogenated functionalized copolymers, which provide improved mechanical strength, especially in tread tire applications. Specifically, these rubber compositions may demonstrate a significant improvement in elongation and tensile strength at break. By increasing the mechanical strength, these hydrogenated, functionalized copolymers may desirably enable a weight reduction in the tire, which reduces the rolling resistance of the tire. Moreover, while the present disclosure may focus on the utilization of the present rubber compositions in tire tread applications, the present compositions may also be suitable for tire sidewalls, inner liners and bladders, because the hydrogenated, functionalized copolymers have good ozone resistance properties (due to minimal double bonds) and good gas permeability (due to minimal solubility of gases within the polymer).

One embodiment of the present disclosure is directed to a functionalized copolymer produced by copolymerization of at least one conjugated diolefin monomer and at least one vinyl monomer, the functionalized copolymer comprising at least one functional group having silica reactive moieties, wherein the functionalized copolymer has a degree of hydrogenation of 90 % to 98 mol% as measured using proton nuclear magnetic resonance spectroscopy (¹H NMR).

Another embodiment of the present disclosure is directed to a method of making a hydrogenated functionalized copolymer. The method comprises the steps of: introducing an anionic polymerization initiator, at least one conjugated diolefin monomer, at least one vinyl monomer, and solvent to a reactor to produce a living copolymer via anionic polymerization; reacting at least one functional group comprising silica reactive moieties with the living copolymer to produce a functionalized copolymer; and hydrogenating the functionalized copolymer by mixing the functionalized copolymer with solvent and a hydrogenation catalyst in a hydrogen stream, wherein the hydrogenated functionalized copolymer has a degree of hydrogenation of 90% to 98 mol % as measured using ¹H NMR.

Additional features and advantages of the embodiments described herein will be set forth in the detailed description which follows, and in part will be readily apparent to those skilled in the art from that description or recognized by practicing the embodiments described herein, including the detailed description which follows, and the claims.

### BRIEF DESCRIPTION OF THE DRAWINGS

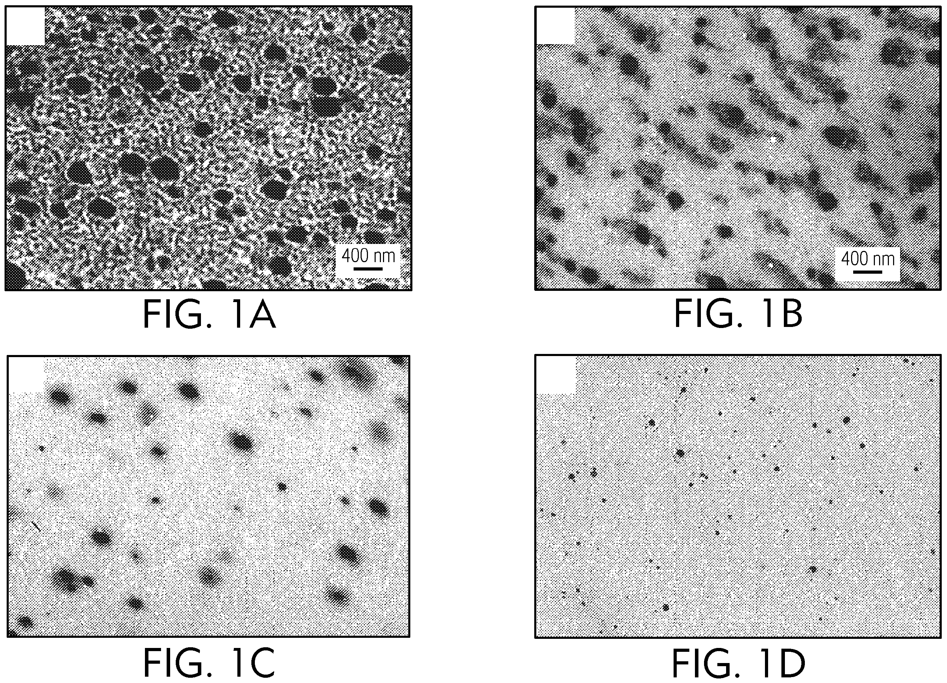

FIG. 1A is a Transmission Electron Microscopy (TEM) micrograph of a styrene butadiene copolymer when hydrogenated to 45.73 mol% with respect to the butadiene (Table 1, Example 4, Sample 5) according to one or more embodiments of the present disclosure.
FIG. 1B is a TEM micrograph of a styrene butadiene copolymer when hydrogenated to 57.95 mol% (Table 1, Example 4, Sample 6) according to one or more embodiments of the present disclosure.
FIG. 1C is a TEM micrograph of a styrene butadiene copolymer when hydrogenated to 68.72 mol% (Table 1, Example 4, Sample 7) according to one or more embodiments of the present disclosure.
FIG. 1D is a TEM micrograph of a styrene butadiene copolymer when hydrogenated to 89.81 mol% (Table 1, Example 4, Sample 10) according to one or more embodiments of the present disclosure.

### DETAILED DESCRIPTION

The present disclosure will now be described by reference to more detailed embodiments, but the disclosure should not be construed as limited to the embodiments set forth herein. Rather, these embodiments are provided so that this disclosure will be thorough and complete, and will fully convey the subject matter to those skilled in the art.

Unless otherwise defined, all technical and scientific terms used herein have the same meaning as commonly understood by one of ordinary skill in the art. The terminology used in the disclosure herein is for describing particular embodiments only and is not intended to be limiting. As used in the specification and the appended claims, the singular forms "a," "an," and "the" are intended to include the plural forms as well, unless the context clearly indicates otherwise. All publications, patent applications, patents, and other references mentioned herein are expressly incorporated by reference in their entirety.

### Definitions

The terminology as set forth herein is for description of the embodiments only and should not be construed as limiting the scope of the disclosure as a whole.

As used herein, the term "phr" means the parts by weight of rubber. If the rubber composition comprises more than one rubber, "phr" means the parts by weight per hundred parts of the sum of all rubbers.

As used herein, the term "polybutadiene" is used to indicate a polymer that is manufactured from 1,3-butadiene monomers. The term polybutadiene is also used interchangeably with the phrase "polybutadiene rubber" and the abbreviation "BR."

As used herein, the term "styrene-butadiene copolymer", "styrene-butadiene rubber" or "SBR" means a copolymer manufactured from styrene and 1,3-butadiene monomers.

As used herein, the term "natural rubber" or "NR" means naturally occurring rubber such as can be harvested from sources such as Hevea rubber trees, and non-Hevea source (e.g., guayule shrubs).

As used herein, the term "copolymer" refers to a polymer produced from two or more monomers, and thus could encompass polymers produced from two monomers or more than two monomers, such as terpolymers.

As used herein, "rubber composition" refers to the copolymer (e.g., the functionalized, hydrogenated copolymer) and the additional fillers and additives blended therewith for use in tire and non-tire applications.

As used herein, "vinyl content" refers to the percentage of 1,2-vinyl double bonds in the polymer (e.g., the functionalized, hydrogenated copolymer).

Embodiments of the present disclosure are directed to functionalized copolymers produced from the copolymerization of at least one conjugated diolefin monomer and at least one vinyl monomer. The functionalized copolymer comprises at least one functional group having silica reactive moieties, and the functionalized copolymer has a degree of hydrogenation of 75% to 98 mol% as measured using proton nuclear magnetic resonance spectroscopy (¹H NMR). Further embodiments are directed to rubber compositions comprising these functionalized, hydrogenated copolymers.

Additional embodiments are directed to methods of making the hydrogenated functionalized copolymers. The method comprises introducing an anionic polymerization initiator, at least one conjugated diolefin monomer, at least one vinyl aromatic monomer, and solvent to a reactor to produce a living copolymer via anionic polymerization; reacting at least one functional group comprising silica reactive moieties with the living copolymer to produce a functionalized copolymer; and hydrogenating the functionalized copolymer by mixing the functionalized copolymer with a solvent and a hydrogenation catalyst, wherein the hydrogenated functionalized copolymer has a degree of hydrogenation of at least 90 mol% as measured using ¹H NMR.

### Monomers

Various monomers are contemplated for the conjugated diolefin monomers and the vinyl monomers.

The conjugated diolefin monomers may include various hydrocarbon compositions. For example, the conjugated diolefins include those having from about 4 to about 12 carbon atoms such as 1,3-butadiene, 1,3-cyclohexadiene, isoprene, 1,3-pentadiene, 1,3-hexadiene, 2,3-dimethyl-1,3-butadiene, 2-ethyl-1,3-butadiene, 2-methyl-1,3 pentadiene, 3-methyl-1,3-pentadiene, 4-methyl-1,3-pentadiene, and 2,4-hexadiene, or combinations thereof. The conjugated diolefins also may encompass trienes such as myrcene.

The vinyl monomers may copolymerize with the conjugated diolefin monomers to produce a copolymer or terpolymers. The vinyl aromatic monomers may comprise hydrocarbons having from about 8 to about 20 carbon atoms, or from about 8 to 10 carbon atoms. These vinyl aromatic monomers may include vinyl aromatic monomers, for example, monovinyl aromatic hydrocarbons. In one or more embodiments, the vinyl monomers may comprise styrene, alphamethyl styrene, 1-vinylnaphthalene, 2-vinylnaphthalene, 1-alpha-methylvinylnaphthalene, 2-alphamethyl-vinylnaphthalene, and mixtures of these as well as halo, alkoxy, alkyl, cycloalkyl, aryl, alkaryl and aralkyl derivatives thereof in which the total number of carbon atoms in the combined hydrocarbon is generally not greater than 12. Examples of these latter compounds include 4-methylstyrene, vinyl toluene, 3,5-diethylstyrene, 2-ethyl-4-benzylstyrene, 4-phenylstyrene, 4-para-tolylstyrene, and 4,5-dimethyl-1-vinylnaphthalene, or mixtures thereof.

The copolymers may comprise from 20 to 100 % by weight, or about 40 to 80 % by weight of the conjugated diolefin monomers. Conversely, the copolymers may comprise from 0 to about 80 % by weight, or about 10 to about 50 % by weight of vinyl aromatic monomers. The copolymers may be random copolymers or block copolymers. In one embodiment, the conjugated diolefin monomer is 1,3-butadiene and the vinyl aromatic monomer is styrene, which copolymerize to produce styrene butadiene copolymers. In specific embodiments, the copolymer is a random styrene butadiene copolymer.

### Solvents

The polymerizations of the present disclosure may be conducted in the presence of solvent, for example, inert solvent. The term "inert solvent" means that the solvent does not enter into the structure of the resulting polymer, does not adversely affect the properties of the resulting polymer, and does not adversely affect the activity of the catalyst employed. Suitable inert solvents include hydrocarbon solvents which may contain aliphatic, aromatic or cycloaliphatic hydrocarbons such as hexane, pentane, toluene, benzene, cyclohexane and the like. Ethers such as tetrahydrofuran and tertiary amines such as triethylamine and tributylamine may also be used as solvents, but these may modify the polymerization as to styrene distribution, vinyl content and rate of reaction. In one or more embodiments, the solvents may comprise hexane, or blends and mixtures of hexanes (e.g., linear and branched), for example, cyclohexane alone or mixed with other forms of hexane.

### Anionic Polymerization Initiator

Various anionic polymerization initiators are contemplated for the anionic polymerization processes of the present disclosure. The anionic polymerization initiator may comprises a lithium catalyst, specifically, an organolithium anionic initiator catalyst. The organolithium initiator employed may be any anionic organolithium initiators useful in the polymerization of conjugated diolefin monomers (e.g., 1,3-butadiene monomers). In general, the organolithium compounds include hydrocarbon containing lithium compounds of the formula R(Li)x wherein R represents hydrocarbon groups containing from one to about 20 carbon atoms, and preferably from about 2 to about 8 carbon atoms, and x is an integer from 1 to 2. Although the hydrocarbon group is preferably an aliphatic group, the hydrocarbon group may also be cycloaliphatic or aromatic. The aliphatic groups may be primary, secondary, or tertiary groups although the primary and secondary groups are preferred. Examples of aliphatic hydrocarbyl groups include methyl, ethyl, n-propyl, isopropyl, n-butyl, sec-butyl, t-butyl, n- amyl, sec-amyl, n-hexyl, sec-hexyl, n-heptyl, n-octyl, n-nonyl, n-dodecyl, and octa-decyl. The aliphatic groups may contain some unsaturation such as allyl, 2-butenyl, and the like. Cycloalkyl groups are exemplified by cyclohexyl, methylcyclohexyl, ethylcyclohexyl, cycloheptyl, cyclopentylmethyl, and methylcyclopentylethyl. Examples of aromatic hydrocarbyl groups include phenyl, tolyl, phenylethyl, benzyl, naphthyl, phenyl cyclohexyl, and the like. Mixtures of different lithium initiator compounds also can be employed such as those containing one or more lithium compounds such as R(Li)x, R and x as defined above. Other lithium catalysts which can be employed alone or in combination with the hydrocarbyl lithium initiators are tributyl tin lithium, lithium dialkyl amines, lithium dialkyl phosphines, lithium alkyl aryl phosphines and lithium diaryl phosphines. In one embodiment, the organolithium initiator is n-butyl lithium.

The amount of initiator required to effect the desired polymerization can be varied over a wide range depending upon a number of factors such as the desired polymer molecular weight, the desired 1,2- and 1,4-content of the conjugated diene, and the desired physical properties for the polymer produced. In general, the amount of initiator utilized may vary from as little as 0.2 millimole of lithium per 100 grams of monomers up to about 100 millimoles of lithium per 100 grams of monomers, depending upon the desired polymer molecular weight (typically 1,000 to 10,000,000 grams/mole average molecular weight).

Polymerization is begun by introducing the monomer(s) and solvent to a suitable reaction vessel, followed by the addition of the anionic polymerization initiators. The polymerization reaction may be carried out in a batch polymerization reactor system or a continuous polymerization reactor system. Polymerization conditions such as temperature, pressure and time are well known in the art for polymerizing the monomers as described with the anionic polymerization initiator as described. For example, for illustrative purposes only, the temperature employed in the polymerization is generally not critical and may range from about - 60° C to about 150° C Exemplary polymerization temperatures may range from about 25° C to about 130° C for a polymerization time of a few minutes to up to 24 hours or more, and employing pressures generally sufficient to maintain polymerization admixtures substantially in the liquid phase, for example, at or near atmospheric pressure, depending on the temperature and other reaction parameters. The procedure may be carried out under anhydrous, anaerobic conditions. Polymerization of any of the above-identified monomers in the presence of an organolithium initiator results in the formation of a "living" polymer. The lithium proceeds to move down the growing chain as polymerization continues. Throughout formation or propagation of the polymer, the polymeric structure may be anionic and living. In other words, a carbon anion is present. A new batch of monomer subsequently added to the reaction can add to the living ends of the existing chains and increase the degree of polymerization. A living polymer or copolymer, therefore, may include a polymeric segment having an anionic reactive end.

### Functional Groups

Functional groups may then be applied to the anionic reactive end of the living polymer to cap or terminate the living polymer. For the present functional copolymers, the functional groups may be silica-reactive, and optionally carbon black reactive. The silica-reactive moieties encompass one or more reactive groups that will react with silica reinforcing filler to form an ionic or covalent bond. While many of the functional groups focus on being reactive with silica, it is contemplated that the functional group could be reactive with both silica and carbon black. Useful functional groups that react with silica typically are electron donors or are capable of reacting with a proton. Exemplary groups include one or a combination of alkoxysilyl, hydroxyl, polyalkylene glycol, silanol, silyl halide, anhydride, organic acid, amines, heterocycles, and epoxy groups. Useful silica-reactive compounds containing one or more of these functional groups include functionalized elastomers, silica coupling agents, and silica-reactive dispersing aids.

Various alkoxysilyl compositions are contemplated, for example and not by way of limitation, alkoxysilane compounds, , tetraalkoxysilane compounds, alkylalkoxysilane compounds, alkenylalkoxysilane compounds, halogenoalkoxysilane compounds, or combinations therein. These may include one or more of dimethoxysilanes and trimethoxysilanes.

Examples of the tetraalkoxysilane compound may include tetramethoxysilane, tetraethoxysilane, tetra-n-propoxysilane, tetra-n-butoxysilane, tetra(2-ethylhexanoxy)silane, tetraphenoxysilane, tetratoluyloxysilane, and the like.

Examples of the alkylalkoxysilane may include methyltrimethoxysilane, methyltriethoxysilane, methyltri-n-propoxysilane, methyltri-n-butoxysilane, methyltriphenoxysilane, ethyltrimethoxysilane, ethyltriethoxysilane, ethyltri-n-propoxysilane, ethyltri-n-butoxysilane, ethyltriphenoxysilane, dimethyldimethoxysilane, dimethyldiethoxysilane, dimethyldi-n-propoxysilane, dimethyldi-n-butoxysilane, dimethyldiphenoxysilane, diethyldimethoxysilane, diphenyldimethoxysilane, 3-glycidoxypropyltrimethoxysilane (GPMOS), γ-methacryloxy propyl trimethoxysilane, and combinations thereof.

Examples of the arylalkoxysilane compound may include phenyltrimethoxysilane, phenyltriethoxysilane, phenyltri-n-propoxysilane, phenyltri-n-butoxysilane, phenyltriphenoxysilane, and combinations thereof.

Examples of the alkenylalkoxysilane compound may include vinyltrimethoxysilane, vinyltriethoxysilane, vinyltri-n-propoxysilane, vinyltri-n-butoxysilane, vinyltriphenoxysilane, allyltrimethoxysilane, octenyltrimethoxysilane, divinyldimethoxysilane, styryltrimethoxysilane, and combinations thereof.

Examples of the halogenoalkoxysilane compound may include trimethoxychlorosilane, triethoxychlorosilane, tri-n-propoxychlorosilane, tri-n-butoxychlorosilane, triphenoxychlorosilane, dimethoxydichlorosilane, diethoxydichlorosilane, di-n-propoxydichlorosilane, diphenoxydichlorosilane, methoxytrichlorosilane, ethoxytrichlorosilane, n-propoxytrichlorosilane, phenoxytrichlorosilane, trimethoxybromosilane, triethoxybromosilane, tri-n-propoxybromosilane, triphenoxybromosilane, dimethoxydibromosilane, diethoxydibromosilane, di-n-propoxydibromosilane, diphenoxydibromosilane, methoxytribromosilane, ethoxytribromosilane, n-propoxytribromosilane, phenoxytribromosilane, trimethoxyiodosilane, triethoxyiodosilane, tri-n-propoxyiodosilane, triphenoxyiodosilane, dimethoxydiiodosilane, di-n-propoxydiiodosilane, diphenoxydiiodosilane, methoxytriiodosilane, ethoxytriiodosilane, n-propoxytriiodosilane, phenoxytriiodosilane, and combinations thereof.

Additionally, the alkoxysilyl compositions may include trimethoxysilane compositions, such as 2-(3,4-epoxycyclohexyl)ethyltrimethoxysilane, methyltrimethoxysilane (MeSi(OMe)₃), 3-glycidylpropyltrimethoxysilane, γ-glycidoxypropyltrimethoxysilane, or 3-(1,3-dimethylbutylidene)aminopropyltriethoxysilane. Additionally, the alkoxysilyl compositions may include tetraethylorthosilicate, 3-glycidylpropylmethyldimethoxysilane, or combinations thereof.

In further embodiments, the functional group may comprise carbon black reactive moieties. The carbon reactive moieties may include amine functional groups. Various amines are contemplated, for example, primary amines (e.g., NH₂), secondary amines, or tertiary amines. Moreover, the amine functional groups may include aliphatic or aromatic moieties. In other embodiments, the functional group may comprise a tin compound to make the functional copolymer carbon-black reactive. Various tin compounds are contemplated, for example, monofunctional alkyl tin compounds including but not limited to, butyltin tris-(2-ethylhexanoate), butyltin chloride dihydroxide, butyltin hydroxide oxide hydrate, dibutyltin dilaurate, and dibutyltin dimaleate. Mixtures of monofunctional alkyl tin compounds may also be employed. Additionally, inorganic tin functional groups, such as tin tetrachloride (SnCl₄) are contemplated.

The polymerization conditions and reactants may dictate how much of the functional group is added. In one or more embodiments, the functional group may be present in a molar ratio (to initiator) of about 0.25 to 2, or about 0.5 to 1.

### Additional Polymerization Ingredients

Additionally, in order to promote randomization in copolymerization and to control vinyl content, one or more polymeric modifiers may optionally be added to the polymerization ingredients. Amounts of polymeric modifier may range from 0 to about 90 or more equivalents per equivalent of initiator (e.g., lithium catalyst). Compounds useful as polymeric modifiers are typically organic and include those having an oxygen or nitrogen hetero-atom and a non-bonded pair of electrons. Examples include dialkyl ethers of mono and oligo alkylene glycols, "crown" ethers, tertiary amines such as tetramethyethylene diamine (TMEDA), tetrahydrofuran (THF), 2,2-bis(2'-tetrahydrofuryl)propane, THF oligomers linear and cyclic oligomeric oxolanyl alkanes (e.g., cyclic oligomeric oxolanyl propanes), potassium t-amylate (KTA), or combinations thereof.

The process of the present disclosure may optionally also include a stabilizing agent, for example, a silane stabilizing agent. One suitable silane stabilizing agent is octyltriethoxysilane. Moreover, an antioxidant such as 2,6-di-t-butyl-4-methylphenol (also called butylated hydoxytoluene (BHT)) may be added to reduce the likelihood of Mooney viscosity instability due to oxidative coupling. The stabilizing agent may be added to the reactor or another mixer downstream of the reactor. Similarly, the antioxidant may be added to the reactor or another mixer downstream of the reactor.

Optionally, upon termination, the functional terminated polymer may be quenched, if necessary, and dried. Quenching may be conducted by contacting the functional copolymer with a quenching agent for about 0.05 to about 2 hours at temperatures of from about 30° C to about 120° C to insure complete reaction. Suitable well known quenching agents include alcohols, water, carboxylic acids such 2-ethyl hexanoic acid (EHA), acetic acid and the like. Coagulation is typically done with alcohols such as methanol or isopropanol. Alternative to, or in combination with, the step of quenching, the functional polymer may be drum dried as known in the art. The use of steam or high heat to remove solvent is also considered suitable.

### Hydrogenation

After production of the functionalized copolymer, the functional copolymer is hydrogenated by mixing the functionalized copolymer with a solvent and a hydrogenation catalyst in the presence of a hydrogen stream. The solvent may include one or more of the solvents described above. In one embodiment, the hydrogenation catalyst comprises nickel. In further embodiments, the hydrogenation catalyst comprises nickel and aluminum. In one or more embodiments, the nickel of the hydrogenation catalyst comprises an organic nickel compound such as nickel octoate. For hydrogenation catalysts including nickel and aluminum, the aluminum may also include an organic aluminum compound. In one embodiment, the organic aluminum compound is triethylaluminum. The nickel and aluminum may be included in various amounts. For example, the aluminum and nickel may be added at an Al/Ni molar ratio of 1:1 to 5:1, or from 2:1 to 4:1.

In the hydrogenation process, pressurized hydrogen may be added at a pressure from 1 to 100 atm. Like the above polymerization, additional components, such as the quenching agents and antioxidants, may be added to the reactor.

The following exemplary reaction depicted in Formula 1 below illustrates the hydrogenation of a styrene-butadiene copolymer.

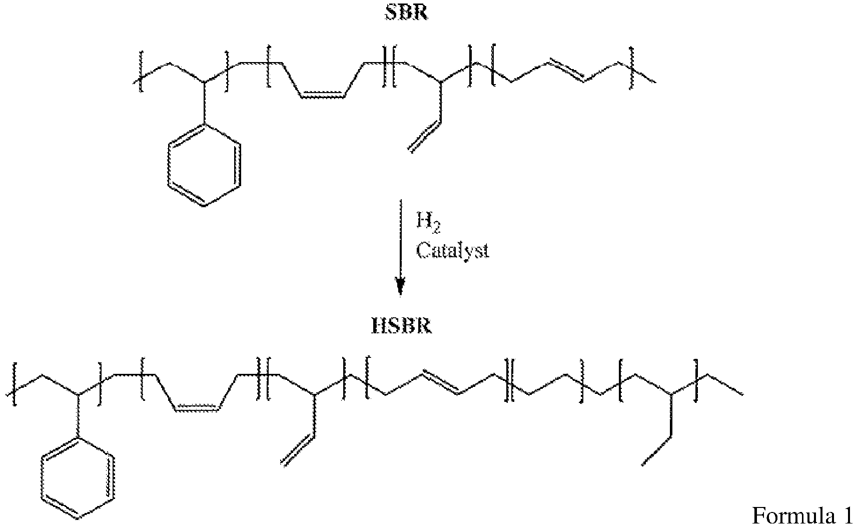

While not shown in Formula 1 above, the styrene butadiene copolymer may be functionalized with a functional group comprising silica reactive moieties prior to hydrogenation. In specific embodiments, the functional copolymer has a degree of hydrogenation as measured using proton nuclear magnetic resonance spectroscopy (¹H NMR), from 90% to 98 mol%. Without being limited to theory, these higher levels of hydrogenation in the functional copolymer correlated to improved mechanical performance.

While the hydrogenation reduces the number of double bonds, the functional copolymer may, in one or more embodiments, has an initial vinyl content prior to hydrogenation from 30 to 60 %. Without being bound by theory, controlling the initial vinyl content can maintain the amorphous nature of the functional copolymer, thereby reducing crystal formation that can degrade performance of the tire tread.

### Rubber Compositions

As stated previously, the hydrogenated, functionalized copolymers detailed above, may be included in rubber compositions for tire and non-tire applications. The rubber composition may also include at least one curative, and at least one reinforcing filler.

### Curative

As used herein, curatives are vulcanizing agents used in the vulcanization of the functionalized copolymer. In one or more embodiments, the curative includes a sulfur-based curative or a peroxide-based curative. Examples of specific suitable sulfur curatives include "rubbermaker's" soluble sulfur; sulfur donating curing agents, such as an amine disulfide, polymeric polysulfide, or sulfur olefin adducts; and insoluble polymeric sulfur. In one embodiment, the sulfur curative comprises soluble sulfur or a mixture of soluble and insoluble polymeric sulfur. For a general disclosure of suitable curatives and other components used in curing, e.g., vulcanizing inhibitor and anti-scorching agents, one can refer to Kirk-Othmer, Encyclopedia of Chemical Technology, 3rd ed., Wiley Interscience, N.Y. 1982, Vol. 20, pp. 365 to 468, particularly Vulcanization Agents and Auxiliary Materials, pp. 390 to 402, or Vulcanization by A. Y. Coran, Encyclopedia of Polymer Science and Engineering, Second Edition (1989 John Wiley & Sons, Inc.), both of which are incorporated herein by reference. While various amounts are contemplated, the curatives may be used in an amount ranging from 0.1 to 10 phr, including from 1 to 7.5 phr, including from 1 to 5 phr, and preferably from 1 to 3.5 phr.

### Reinforcing Filler

As used herein, "reinforcing filler" may refer particulate material that has a nitrogen absorption specific surface area (N2SA) of more than about 100 m²/g, and in certain instances more than 100 m²/g, more than about 125 m²/g, more than 125 m²/g, or even more than about 150 m²/g or more than 150 m²/g. Alternatively, "reinforcing filler" can also be used to refer to a particulate material that has a particle size of about 10 nm to about 50 nm.

In one or more embodiments, the reinforcing filler may comprise silica, carbon black, or combinations thereof.

Various carbon black compositions are considered suitable. Among the useful carbon blacks are furnace black, channel blacks, and lamp blacks. More specifically, examples of useful carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which can be utilized include acetylene blacks. In certain embodiments, the rubber composition includes a mixture of two or more of the foregoing carbon blacks.

Various amounts of carbon black are contemplated. In one or more embodiments, the total amount of the reinforcing carbon black filler is 5 to about 175 phr, including 5 to 175 phr, about 5 to about 150 phr, 5 to 150 phr, about 5 to about 100 phr, 5 to 100 phr, or about 10 to about 200 phr, including 10 to 200 phr, about 20 to about 175 phr, 20 to 175 phr, about 20 to about 150 phr, 20 to 150 phr, about 25 to about 150 phr, 25 to 150 phr, about 25 to about 100 phr, 25 to 100 phr, about 30 to about 150 phr, 30 to 150 phr, about 30 to about 125 phr, 30 to 125 phr, about 30 to about 100 phr, 30 to 100 phr, about 35 to 150 phr, 35 to 150 phr, about 35 to about 125 phr, 35 to 125 phr, about 35 to about 100 phr, 35 to 100 phr, about 35 to about 80 phr, and 35 to 80 phr. The carbon blacks utilized can be in pelletized form or an unpelletized flocculent mass. For more uniform mixing in the rubber composition, unpelletized carbon black may be used in some embodiments.

Moreover, silica filler may also be used as reinforcing filler. Examples of reinforcing silica fillers suitable for use include, but are not limited to, precipitated amorphous silica, wet silica (hydrated silicic acid), dry silica (anhydrous silicic acid), fumed silica, calcium silicate and the like. Other suitable silica fillers for use in rubber compositions of certain embodiments of the first-third embodiments disclosed herein include, but are not limited to, aluminum silicate, magnesium silicate (e.g., Mg2SiO₄, MgSiO₃), magnesium calcium silicate (CaMgSiO₄), aluminum calcium silicate (e.g., Al₂O₃.CaO₂SiO₂), and the like.

Like the carbon black, various amounts of silica are contemplated for use as reinforcing filler. In one or more embodiments, the total amount of the reinforcing silica filler or silica filler may be about 5 to about 175 phr, including 5 to 175 phr, about 5 to about 150 phr, 5 to 150 phr, about 5 to about 100 phr, 5 to 100 phr, or about 10 to about 200 phr, including 10 to 200 phr, about 20 to about 175 phr, 20 to 175 phr, about 20 to about 150 phr, 20 to 150 phr, about 25 to about 150 phr, 25 to 150 phr, about 25 to about 100 phr, 25 to 100 phr, about 30 to about 150 phr, 30 to 150 phr, about 30 to about 125 phr, 30 to 125 phr, about 30 to about 100 phr, 30 to 100 phr, about 35 to 150 phr, 35 to 150 phr, about 35 to about 125 phr, 35 to 125 phr, about 35 to about 100 phr, 35 to 100 phr, about 35 to about 80 phr, and 35 to 80 phr.

In other embodiments, the rubber composition may comprise at least one reinforcing filler other than carbon black or silica, or alternatively in addition to reinforcing carbon black and reinforcing silica fillers. Non-limiting examples of suitable such reinforcing fillers for use in the rubber compositions disclosed herein include, but are not limited to, aluminum hydroxide, talc, alumina (Al₂O₃), aluminum hydrate (Al₂O₃H₂O), aluminum hydroxide (Al(OH)₃), aluminum carbonate (Al₂(CO₃)₂), aluminum magnesium oxide (MgOAl₂O₃), pyrofilite (Al₂O₃4SiO₂.H₂O), bentonite (Al₂O₃.4SiO₂.2H₂O), mica, kaolin, glass balloon, glass beads, calcium oxide (CaO), calcium hydroxide (Ca(OH)2), calcium carbonate (CaCO₃), magnesium carbonate, magnesium hydroxide (Mg(OH)2), magnesium oxide (MgO), magnesium carbonate (MgCO₃), potassium titanate, barium sulfate, zirconium oxide (ZrO2), zirconium hydroxide [Zr(OH)₂.nH₂O], zirconium carbonate [Zr(CO₃)₂], crystalline aluminosilicates, reinforcing grades of zinc oxide (i.e., reinforcing zinc oxide), and combinations thereof. When at least one reinforcing filler other than or alternatively in addition to reinforcing carbon black filler and reinforcing silica filler) is present, the total amount of all reinforcing fillers is about 5 to about 200 phr including 5 to 200 phr). In other words, when at least one reinforcing filler is present in addition to carbon black silica, or both, the amount of reinforcing carbon black filler and reinforcing silica filler is adjusted so that the total amount of reinforcing filler is about 5 to about 200 phr (including 5 to 200 phr).

### Additional Rubber

In further embodiments, the rubber composition may comprise an additional rubber component comprising natural rubber, synthetic rubber, or combinations thereof. For example, and not by way of limitation, the synthetic rubber may comprise synthetic polyisoprene, polyisobutylene-co-isoprene, neoprene, poly(ethylene-co-propylene), poly(styrene-co-butadiene), poly(styrene-co-isoprene), and poly(styrene-co-isoprene-co-butadiene), poly(isoprene-co-butadiene), poly(ethylene-co-propylene-co-diene), polysulfide rubber, acrylic rubber, urethane rubber, silicone rubber, epichlorohydrin rubber, or combinations thereof.

### Additional Additives

Optionally, a silane coupling agent may be blended with the silica reinforcing filler further improve the reinforcing properties. For example, the silane coupling agent may include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxy silane, 3-mercaptopropyltriethoxy silane, 2-mercaptoethyltrimethoxy silane, 2-mercaptoethyltriethoxy silane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyl dimethoxymethyl silane, dimethoxymethylsilylpropyl-N,N-dimethylthiocarbamoyl tetrasulfide, dimethoxymethylsilylpropyl benzothiazole tetrasulfide, 3-hexanoylthiopropyltriethoxysilane, 3-octanoylthiopropyltriethoxysilane, 3-decanoylthiopropyltriethoxy silane, 3-lauroylthiopropyltriethosysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane and 2-lauroylthioethyltrimethoxysilane, and the like. These silane coupling agents may be used alone or in a combination of two or more.

Useful processing or extender oils may also be included. Such oils include those that are commercially available as paraffinic, aromatic, or naphthenic oils. In one or more embodiments, the major constituent of the oil is naphthenic. The rubber compositions may also include other additives such as anti-ozonants, waxes, scorch inhibiting agents, processing aids, zinc oxide, tackifying resins, reinforcing resins, fatty acids such as stearic acid, peptizers, and one or accelerators.

The anti-ozonants may comprise N,N'disubstituted-p- phenylenediamines, such as N-1,3-dimethylbutyl-N'phenyl-p-phenylenediamine (6PPD), N,N'-Bis(1,4-dimethylpently)-p-phenylenediamine (77PD), N-phenyl-N-isopropyl-p- phenylenediamine (IPPD), and N-phenyl-N'-(1,3-dimethylbutyl)-p-phenylenediamine (HPPD). Other examples of anti-ozonants include, Acetone diphenylamine condensation product (Alchem BL), 2,4-Trimethyl-1,2-dihydroquinoline (TMQ), Octylated Diphenylamine (ODPA), and 2,6-di-t-butyl-4-methyl phenol (BHT).

The curing accelerators may include, but are not limited to, dithiocarbamate accelerators, including the metal dialkyldithiocarbamates such as, for example, zinc dibutyldithiocarbamate (ZDBDC), zinc diethyldithiocarbamate, zinc dimethyldithiocarbamate, and ferric dimethyldithiocarbamate; thiazole accelerators including 2-mercaptobenzothiazole, the benzothiazole disulfides such as, for example, mercaptobenzothiazole disulfide (MBTS); the benzothiazole sulfenamides, such as, for example, n-cyclohexyl-2-benzothiazole sulfenamide; and sulfenamide accelerators such as, for example, *t*-butyl-2-benzothiazyl sulfenamide (TBBS).

The rubber compositions may include at least 3 parts by weight filler per 1000 parts rubber (phr), or about 5 to about 1000 phr, or about 20 to about 80 phr, or about 30 to about 50 phr. The rubber compositions may also include from about 0 to about 80 parts processing or extender oil per 100 parts by weight rubber, or from about 5 to about 50 phr, or from about 10 to about 30 phr.

Of the total hundred parts rubber, the functional copolymer may include from about 20 to about 100 parts of the 100 total, or about 25 to about 75 parts of the 100 total, 30 to about 60 parts of the 100 total.

The rubber composition may be obtained by milling with a milling machine such as rolls, an internal mixer or the like, which can be shaped and vulcanized for use in tire applications such as a tread, an under tread, a carcass, a sidewall, a bead and the like as well as a rubber cushion, a belt, a hose and other industrial products, but it is particularly suitable for use in the tire tread.

The embodiments of the present disclosure are further illustrated by reference to the following examples.

### EXAMPLES

### Example 1: Synthesis of SBR

A standard styrene-butadiene copolymer (SBR) was prepared according to the following process. To a two gallon (approximately 7.5 liter) N2 purged reactor equipped with a stirrer was added 2.282 kilograms of hexane, 0.771 kilograms of 33.0 weight % styrene in hexane, and 3.698 kilograms of 20.7 weight % 1,3-butadiene in hexane. The reactor was charged with 5.32 milliliters of n-butyllithium (1.60 Molar in hexane), followed by 1.06 milliliters of 2,2-bis(2'-tetrahydrofuryl)propane (1.60 Molar in hexane), and the reactor jacket was heated to 50 °C. After 35 minutes, the batch temperature peaked at 63.8 °C. After an additional 30 minutes, the polymer cement was dropped into dried 28-oz glass bottles and the anionic polymerization reaction was terminated by adding 0.38 milliliters of isopropyl alcohol/hexane 1.0 M solution.

Referring to Table 1 below, the polymer microstructure of an initial SBR sample prior to hydrogenation can be seen in Table 1. Without being bound by theory, maintaining the amorphous nature of the rubber and reducing or eliminating crystallinity may be desirable. This amorphous nature may be maintained by ensuring the vinyl content is between 30-60%. At lower vinyl contents, polyethylene crystallites may begin to form and thereby detrimentally increase rolling resistance.

**Table 1: Standard SBR prior to hydrogenation**

| **SBR Data** | **Example 1** |
|---|---|
| % Styrene | 24.7 |
| % Block Styrene (≥3) | 7.1 |
| % 1,2 Bd (Vinyl Content) | 32.2 |
| % 1,4 Bd (Cis and Trans content) | 43.1 |
| ML₁₊₄ | 10.4 |
| T₈₀ | 0.77 |

| GPC Data | |
|---|---|
| Mₙ | 186,051 |
| M_{w} | 198,959 |
| Mₚ | 187,238 |
| M_{w}/Mₙ | 1.07 |

### Example 2: Synthesis of 2-(3,4-epoxycyclohexyl)ethyltrimethoxysilane Functionalized SBR

2-(3,4-epoxycyclohexyl)ethyltrimethoxysilane functionalized styrene-butadiene copolymer (SBR) was prepared according to the following process. To a two gallon (approximately 7.5 liter) N2 purged reactor equipped with a stirrer was added 2.282 kilograms of hexane, 0.771 kilograms of 33.0 weight % styrene in hexane, and 3.698 kilograms of 20.7 weight % 1,3-butadiene in hexane. The reactor was charged with 5.32 milliliters of n-butyllithium (1.60 Molar in hexane), followed by 1.06 milliliters of 2,2-bis(2'-tetrahydrofuryl)propane (1.60 Molar in hexane), and the reactor jacket was heated to 50 °C. After 35 minutes, the batch temperature peaked at 63.8 °C. After an additional 30 minutes, the polymer cement was dropped into dried 28-oz glass bottles and the anionic polymerization reaction was terminated by adding 2-(3,4-epoxycyclohexyl)ethyltrimethoxysilane and 2.30 milliliters of isopropyl alcohol/hexane 0.165 M solution. Specifically, 2-(3,4-epoxycyclohexyl)ethyltrimethoxysilane was added at 1 mole equivalent per 1 mole equivalent of LiBu. The SBR has a vinyl content of 32.2%.

### Example 3: Synthesis of MeSi(OMe)₃ Functionalized SBR

MeSi(OMe)3 functionalized styrene-butadiene copolymer (SBR) was prepared according to the following process. To a two gallon (approximately 7.5 liter) N2 purged reactor equipped with a stirrer was added 2.282 kilograms of hexane, 0.771 kilograms of 33.0 weight % styrene in hexane, and 3.698 kilograms of 20.7 weight % 1,3-butadiene in hexane. The reactor was charged with 5.32 milliliters of n-butyllithium (1.60 Molar in hexane), followed by 1.06 milliliters of 2,2-bis(2'-tetrahydrofuryl)propane (1.6 Molar in hexane), and the reactor jacket was heated to 50 °C. After 35 minutes, the batch temperature peaked at 63.8 °C. After an additional 30 minutes, the polymer cement was dropped into dried 28-oz glass bottles and the anionic polymerization reaction was terminated by adding MeSi(OMe)3 and 0.38 milliliters of isopropyl alcohol/hexane 1.0 M solution. Specifically, MeSi(OMe)3 was added at 1 mole equivalent per 1 mole equivalent of LiBu.

### Example 4: Hydrogenation of SBR from Example 1

To a 2 gallon (approximately 8 liter) reactor under nitrogen atmosphere, 1,101 g of the Example 1 SBR solution in hexane was introduced, followed by 1,101 g of hexane, which resulted in a 7.5 wt% SBR solution. The reactor was purged 3 times with 20 psi hydrogen and then heated to 50 °C. To a nitrogen purged dry bottle, 30 mL of hexane and 2.1 mL of 1.03 M triethylaluminum was added, followed by 0.73 mL of nickel octoate (5.96 wt% Ni in hexane), resulting in a Ni/Al catalyst (Al/Ni=3.3/1.0). The catalyst solution was transferred into the reactor, and hydrogen was immediately filled at a reactor pressure of 75 psi. An aliquot of reaction mixture was dropped into a bottle containing isopropanol, and 0.1 mL HCl and butylated hydroxytoluene (BHT). The coagulated polymer sample was dried under vacuum. The level of hydrogenation was then determined for various samples using ¹H NMR. As shown in Table 2 below, 13 samples of the Example 1 SBR were hydrogenated, and the resultant polymers (Example 4 Samples 1-12) had very similar glass transition temperatures (Tg) to the non-hydrogenated SBR (Example 1).

**Table 2: Effect of hydrogenation content on the glass transition temperature (Tg)**

| **Example #** | **Hydrogenation Level (mol.%)** | **Tg (°C)** |
|---|---|---|
| Example 1 | 0 | -41.0 |
| Example 4, Sample 1 | 5.88 | -40.56 |
| Example 4, Sample 2 | 10.14 | -42.01 |
| Example 4, Sample 3 | 19.65 | -42.34 |
| Example 4, Sample 4 | 32.05 | -42.57 |
| Example 4, Sample 5 | 45.73 | -43.33 |
| Example 4, Sample 6 | 57.95 | -44.7 |
| Example 4, Sample 7 | 68.72 | -44.76 |
| Example 4, Sample 8 | 77.13 | -44.39 |
| Example 4, Sample 9 | 84.66 | -43.13 |
| Example 4, Sample 10 | 89.81 | -41.56 |
| Example 4, Sample 11 | 93.2 | -41.74 |
| Example 4, Sample 12 | 95.92 | -41.79 |

The above glass transition temperatures were measured using differential scanning calorimetry (DSC). No crystallinity was observed during the DSC testing for these samples of Table 2. Several of these partially hydrogenated samples were then imaged using transmission electron microscopy to determine the microphase separation as shown in the micrographs of FIGS. 1A-1D. The images were obtained by staining the remaining unsaturated double bonds with osmium tetroxide (OsO₄), which will cause the double bonds to appear darker in the image. In contrast to a standard SBR which has one single phase, these partially hydrogenated SBRs have very small length scale features on the order of 50 to 150 nm. As stated above, the heterogeneous hydrogenation leads to areas with high concentrations of double bonds and low concentrations of double bonds leads to heterogeneous crosslink density, which contributes to the improved mechanical properties.

### Example 5. Hydrogenation of 2-(3,4-epoxycyclohexyl)ethyltrimethoxysilane Functionalized SBR from Example 2

To a 2 gallon (approximately 8 liter) reactor under nitrogen atmosphere, 1,126 g of the Example 2 2-(3,4-epoxycyclohexyl)ethyltrimethoxysilane functionalized SBR solution in hexane was introduced, followed by 1,126 g of hexane, which resulted in a 7.5 wt% SBR solution. The reactor was purged 3 times with 20 psi hydrogen and then heated to 50 °C. To a nitrogen purged dry bottle, 30 mL of hexane and 2.2 mL of 1.03 M triethylaluminum was added, followed by 0.74 mL of nickel octoate (5.96 wt% Ni in hexane), resulting in a Ni/Al catalyst (Al/Ni=3.3/1.0). The catalyst solution was transferred into the reactor, and hydrogen was immediately filled the reactor to 75 psi. After 2 hours of hydrogenation reaction, hydrogen was released from the reactor and the polymer cement was dropped into a bucket containing 8 L of isopropanol, 1 mL of HCl and 5 g of butylated hydroxytoluene (BHT). The coagulated polymer sample was dried by a drum-drier at 120 °C. GPC and DSC data is provided in Table 2 below.

### Example 6: Hydrogenation of MeSi(OMe)₃ Functionalized SBR from Example 3

To a 2 gallon (approximately 8 liter) reactor under nitrogen atmosphere, 1,154 g of the Example 2 MeSi(OMe)3 functionalized SBR solution in hexane was introduced, followed by 1,154 g of hexane, which resulted in a 7.5 wt% SBR solution. The reactor was purged 3 times with 20 psi hydrogen and then heated to 50 °C. To a nitrogen purged dry bottle, 30 mL of hexane and 2.2 mL of 1.03 M triethylaluminum was added, followed by 0.76 mL of nickel octoate (5.96 wt% Ni in hexane), resulting in a Ni/Al catalyst (Al/Ni=3.3/1.0). The catalyst solution was transferred into the reactor, and hydrogen was immediately filled the reactor to 75 psi. After 2 hours of hydrogenation reaction, hydrogen was released from the reactor and the polymer cement was dropped into a bucket containing 8 L of isopropanol, 1 mL of HCl and 5 g of butylated hydroxytoluene (BHT). The coagulated polymer sample was dried by a drum-drier at 120 °C. GPC and DSC data is provided in Table 3 below. percent of alkoxylsilane attached to the polymer backbone

**Table 3**

| **Property** | **Example 5** | **Example 6** |
|---|---|---|
| wt% Styrene | 24.2 | 24.2 |
| Hydrogenation level, mol% (Bd = 100) | 94.9 | 92.9 |

| **GPC Data** | | |
|---|---|---|
| Mn | 224,413 | 250,993 |
| Mw | 382,173 | 393,460 |
| Mp | 192,572 | 195,333 |
| Mw/Mn | 1.70 | 1.57 |
| **DSC Data** | | |
| Coupled, % | 29.7 | 49.0 |
| Tg, (°C) | -42.99 | -42.30 |

### Example 7

Referring to Table 4 below, rubber composition samples were produced from the above copolymers and evaluated using various metrics. While the specific amounts are listed below, the rubber compositions, which were produced from mixing in a Brabender mixer, include the following components: SiO₂, oil, stearic acid, wax, 1,3-dimethylbutyl-N'phenyl-p-phenylenediamine (6PPD), and silane, while the cure package includes ZnO, sulfur, n-tertiary butyl-2-benzothiazole sulfenamide (TBBS), diphenylguanidine (DPG), and mercaptobenzothiazole disulfide (MBTS).

**Table 4: Rubber Compositions Samples and Properties**

| | **Comp. Sample 1** | **Comp. Sample 2** | **Comp. Sample 3** | **Comp. Sample 4** | **Comp. Sample 5** | **Sample 13** | **Sample 14** | **Sample 15** |
|---|---|---|---|---|---|---|---|---|
| **Masterbatch Stage** | | | | | | | | |
| Comparative SBR* | 100 | 100 | 100 | 100 | 100 | 0 | 0 | 0 |
| Example 6 Hydrogenated MeSi(OMe)3 Functionalized SBR | 0 | 0 | 0 | 0 | 0 | 100 | 0 | 0 |
| Example 5 Hydrogenated 2-(3,4-epoxycyclohexyl)ethylt rimethoxysilane functionalized SBR | 0 | 0 | 0 | 0 | 0 | 0 | 100 | 0 |
| Example 4 Sample 12 Hydrogenated Non-functionalized SBR | 0 | 0 | 0 | 0 | 0 | 0 | 0 | 100 |
| SiO₂** | 55 | 45 | 65 | 55 | 55 | 55 | 55 | 55 |
| Oil, aliphatic | 10 | 10 | 10 | 10 | 10 | 10 | 10 | 10 |
| Stearic acid | 2 | 2 | 2 | 2 | 2 | 2 | 2 | 2 |
| (1,3-dimethylbutyl)-N'-phenyl-p-phenylenediamine (6PPD) | 1 | 1 | 1 | 1 | 1 | 1 | 1 | 1 |
| Silane | 3.2 | 3.2 | 3.2 | 3.2 | 3.2 | 3.2 | 3.2 | 3.2 |
| REMILL Stage | 171.2 | 171.2 | 171.2 | 171.2 | 171.2 | 171.2 | 171.2 | 171.2 |
| Zinc Oxide | 2.5 | 2.5 | 2.5 | 2.5 | 2.5 | 2.5 | 2.5 | 2.5 |
| Mercaptobenzothiazole disulfide (MBTS) | 0.7 | 0.7 | 0.7 | 0.7 | 0.7 | 0.7 | 0.7 | 0.7 |
| Diphenylguanidine (DPG) | 1.6 | 1.6 | 1.6 | 1.6 | 1.6 | 1.6 | 1.6 | 1.6 |
| N-Tertiary Butyl-2-Benzothiazole Sulfenamide (TBBS) | 1.5 | 1.5 | 1.5 | 1.5 | 1.5 | 1.5 | 1.5 | 1.5 |
| Sulfur | 1.65 | 1.65 | 1.65 | 1.65 | 1.65 | 1.65 | 1.65 | 1.65 |
| % Hydrogenation, mol% | 0 | 0 | 0 | 50 | 55.5 | 92.9 | 94.9 | 95 |
| Fracture Resistance (Normalized) | 100**** | 101 | 126 | 135 | 145 | 232 | 267 | 190 |
| Abrasion Resistance (Normalized) | 100**** | 97 | 86 | *** | *** | 108 | 117 | 91 |

| | | | | | | | | |
|---|---|---|---|---|---|---|---|---|
| * The Comparative SBR is HX765 manufactured by Firestone Chemical Company. The SBR was obtained by solution polymerization and modified with Sn. The trade name is FS CHEMICAL HX765. ** The Silica is WK023, a high surface area silica with 190 m²/g surface area N₂ absorption. *** Not measured **** Comparative Sample 1 is the control sample with an index of 100 for fracture resistance and abrasion resistance, which all other samples are compared. | | | | | | | | |

As shown in Table 4 above, the normalized fracture resistance and normalized abrasion resistance of hydrogenated Samples 13-15 are compared to non-hydrogenated samples (Comparative Samples 1-3) and samples with lower hydrogenation levels (Comparative Samples 4 and 5). In this comparison, non-hydrogenated Comparative Sample 1 is the control sample with which all other samples in Table 4 are compared. As a result, Comparative Sample 1 has an index of 100 for fracture resistance and abrasion resistance. Samples having greater than 100 for normalized fracture resistance and/or normalized abrasion resistance are considered to demonstrate improvements over the control sample (Comparative Sample 1) for fracture resistance and/or normalized abrasion resistance. As shown, hydrogenated Samples 13-15 demonstrated much higher fracture resistance than non-hydrogenated Comparative Samples 1-3, and comparable abrasion resistance to Comparative Samples 1-3. Further, hydrogenated Samples 13-15 demonstrated much higher fracture resistance than Comparative Samples 4 and 5, which had lower hydrogenation levels. Moreover, hydrogenated Samples 13-15 demonstrated higher fracture resistance than Comparative Sample 3 despite the fact that Comparative Sample 3 contained more silica reinforcing filler than hydrogenated Samples 13-15.

Additionally, when comparing alkoxysilane functionalized hydrogenated Samples 13 and 14 against non-functionalized hydrogenated Sample 15, it is clear that the alkoxysilane functional groups also improved the fracture resistance and abrasion resistance of the rubber compositions. Consequently, the hydrogenation improves the fracture resistance of the rubber compositions, and the hydrogenation and alkoxylsilane functionalization synergistically improves the fracture resistance of rubber compositions significantly more than hydrogenation alone. Moreover, alkoxysilane functionalized hydrogenated Samples 13 and 14 demonstrated improved abrasion resistance relative to non-functionalized hydrogenated Sample 15. This further demonstrates the improved strength properties yielded by the alkoxylsilane functional groups.

### TESTING METHODS

### Mooney Viscosity

The Mooney viscosities of polymers disclosed herein were determined at 100 °C using an Alpha Technologies Mooney viscometer with a large rotor, a one minute warm-up time, and a four minute running time. More specifically, the Mooney viscosity was measured by preheating each polymer to 100 °C for one minute before the rotor starts. The Mooney viscosity was recorded for each sample as the torque at four minutes after the rotor started. Torque relaxation was recorded after completing the four minutes of measurement. The t₈₀ values represent the time required for decaying 80% of the torque of each polymer.

### Gel Permeation Chromatography (GPC)

The molecular weight (Mₙ, M_{w} and Mₚ-peak Mₙ of GPC curve) and molecular weight distribution (M_{w}/Mₙ) of the polymers were determined by GPC. The GPC measurements disclosed herein are calibrated with polystyrene standards and Mark-Houwink constants for the polystyrenes produced.

### Differential Scanning Calorimetry (DSC)

DSC measurements were made on a TA Instruments Q2000 with helium purge gas and a Liquid Nitrogen Cooling System (LNCS) accessory for cooling. The sample was prepared in a TZero aluminum pan and scanned at 10°C/min over the temperature range of interest.

### Fourier Transform Infrared Spectroscopy (FTIR)

The microstructures (cis, trans and vinyl contents) of the polymers were determined by FTIR. Specifically, the samples are dissolved in CS2 and subjected to FTIR on a Perkin Elmer Spectrum GX instrument.

### Viscoelastic Properties

Viscoelastic properties of cured rubber compounds were measured by a temperature sweep test conducted with an Advanced Rheometric Expansion System (ARES) from TA Instruments. The test specimen had a rectangular geometry having a length of 47 mm, a thickness of 2 mm, and a width of 12.7 mm. The length of specimen between the grips on the test machine, i.e., the gap, is approximately 27 mm. The test was conducted using a frequency of 62.8 rad/sec. The temperature is started at -100 °C and increased to 100 °C. The strain is 0.1% or 0.25% for the temperature range of -100 °C to -10 °C, and 2% for the temperature range of -10 °C and above.

### Fracture Resistance

As stated above, a tensile test was carried out according to ASTM D412-15a to measure the tensile strength (T_{b}) of a vulcanized rubber composition, which is represented by an index on the basis that comparative example 1 in Table 4 is 100. The larger the index value, the better the fracture resistance.

### Wear Resistance

The wear resistance of the test samples was evaluated using an abrasion test. Test specimens were rubber wheels of about 70 mm in outside diameter, about 30 mm in inside diameter and about 20 mm in thickness. The test specimens were placed on an axle and run at various slip ratios against a driven abrasive surface for various amounts of time. The abrading surface used was 240 grit sandpaper. A load of about 35 N was applied to the rubber wheel during testing. A linear, least squares curve-fit was applied to the weight loss data as a function of time. The slope of the line is the abrasion rate. The reported wear index is one-hundred multiplied by the control compound abrasion rate divided by the subject compound abrasion rate. Thus, a wear index greater than 100 indicates that the subject composition is better (abrades at a lower rate) than its respective control composition.

A first aspect of the present disclosure may be directed to a polymer comprising a functionalized copolymer produced by copolymerization of at least one conjugated diolefin monomer and at least one vinyl monomer, the functionalized copolymer comprising at least one functional group having silica reactive moieties, wherein the functionalized copolymer has a degree of hydrogenation of 75% to 98 mol% as measured using proton nuclear magnetic resonance spectroscopy (¹H NMR).

A second aspect of the present disclosure may include the first aspect, wherein the conjugated diolefin monomer comprises 1,3 butadiene, isoprene, myrcene, or combinations thereof, and wherein the vinyl monomer comprise styrene, alpha methyl styrene, or combinations thereof.

A third aspect of the present disclosure may include the first or second aspects, wherein the silica reactive moieties comprises one or more groups selected from alkoxysilyl, hydroxyl, polyalkylene glycol, silanol, silyl halide, anhydride, organic acid, epoxy groups and combinations thereof.

A fourth aspect of the present disclosure may include the first through third aspects, wherein the functional group comprises carbon black reactive moieties.

A fifth aspect of the present disclosure may include the first through fourth aspects, wherein the functionalized copolymer has a vinyl content from 10 to 60% and the degree of hydrogenation of the functionalized copolymer is at least 85 mol%.

A sixth aspect of the present disclosure may include the first through fifth aspects, wherein the functional group comprises trimethoxysilane, dimethoxysilane, or combinations thereof.

A seventh aspect of the present disclosure may include the first through sixth aspects, wherein the functionalized copolymer is a silane functionalized styrene butadiene copolymer.

A seventh aspect of the present disclosure may include a rubber composition having comprising the polymer the first through sixth aspects, at least one curative, and reinforcing filler.

An eighth aspect of the present disclosure may include the seventh aspect, wherein the rubber composition further comprises an additional rubber comprising natural rubber, synthetic rubber, or combinations thereof.

A ninth aspect of the present disclosure may include the seventh or eighth aspects, wherein the rubber composition wherein the reinforcing filler comprises silica, carbon black, or combinations thereof.

A tenth aspect of the present disclosure may include the seventh through ninth aspects, wherein the curative comprises sulfur.

A eleventh aspect of the present disclosure may include a method of making a hydrogenated functionalized copolymer comprising the steps of: introducing an anionic polymerization initiator, at least one conjugated diolefin monomer, at least one vinyl monomer, and solvent to a reactor to produce a living copolymer via anionic polymerization; reacting at least one functional group comprising silica reactive moieties with the living copolymer to produce a functionalized copolymer; and hydrogenating the functionalized copolymer by mixing the functionalized copolymer with solvent and a hydrogenation catalyst in a hydrogen stream, wherein the hydrogenated functionalized copolymer has a degree of hydrogenation of 75% to 98 mol % as measured using ¹H NMR.

A twelfth aspect of the present disclosure may include the eleventh aspect wherein the conjugated diolefin monomer comprises 1,3 butadiene, isoprene, myrcene, or combinations thereof, and the vinyl monomer comprise styrene, alpha methyl styrene, or combinations thereof.

A thirteenth aspect of the present disclosure may include the eleventh or twelfth aspects, wherein the silica reactive moieties comprise one or more groups selected from alkoxysilyl, hydroxyl, polyalkylene glycol, silanol, silyl halide, anhydride, organic acid, epoxy groups and combinations thereof.

A fourteenth aspect of the present disclosure may include the eleventh through thirteenth aspects, wherein the functional group comprises carbon black reactive moieties.

A fifteenth aspect of the present disclosure may include the eleventh through fourteenth aspects, wherein the hydrogenation catalyst comprises nickel and aluminum, and the anionic polymerization initiator is a lithium catalyst.

A sixteenth aspect of the present disclosure may include the eleventh through fifteenth aspects, wherein the hydrogenation catalyst comprises nickel octoate.

A seventeenth aspect of the present disclosure may include the eleventh through sixteenth aspects, wherein the functional group comprises trimethoxysilane, dimethoxysilane, or combinations thereof.

An eighteenth aspect of the present disclosure may include the eleventh through seventeenth aspects, wherein the functionalized copolymer has a vinyl content from 10 to 60% and the degree of hydrogenation of the functionalized copolymer is at least 85 mol%.

A nineteenth aspect of the present disclosure may include the eleventh through eighteenth aspects, wherein the functionalized copolymer is a silane functionalized styrene butadiene copolymer.

It will be apparent that modifications and variations are possible without departing from the scope of the disclosure defined in the appended claims. More specifically, although some aspects of the present disclosure are identified herein as preferred or particularly advantageous, it is contemplated that the present disclosure is not necessarily limited to these aspects.

## Claims

1. A polymer comprising:
a functionalized copolymer produced by copolymerization of at least one conjugated diolefin monomer and at least one vinyl monomer, the functionalized copolymer comprising at least one alkoxysilyl functional group, the alkoxylsilyl functional group being selected from the group consisting of alkoxysilane compounds, tetraalkoxysilane compounds, alkylalkoxysilane compounds, alkenylalkoxysilane compounds, and halogenoalkoxysilane compounds,
wherein the functionalized copolymer has a degree of hydrogenation of 90 mol% to 98 mol% as measured using proton nuclear magnetic resonance spectroscopy (¹H NMR), and wherein the functionalized copolymer has an initial vinyl content from 30% to 60%.

2. The polymer of claim 1 wherein the conjugated diolefin monomer comprises 1,3 butadiene, isoprene, myrcene, or combinations thereof, and wherein the vinyl monomer comprise styrene, alpha methyl styrene, or combinations thereof, and the silica reactive moieties comprises one or more groups selected from alkoxysilyl, hydroxyl, polyalkylene glycol, silanol, silyl halide, anhydride, organic acid, epoxy groups and combinations thereof.

3. The polymer of any preceding claim wherein the functional group comprises carbon black reactive moieties.

4. The polymer of any preceding claim, wherein the alkoxysilyl functional group comprises trimethoxysilane, dimethoxysilane, or combinations thereof.

5. The polymer of any preceding claim, wherein the functionalized copolymer is a silane functionalized styrene butadiene copolymer.

6. A rubber composition comprising:
the polymer of any preceding claim;
at least one curative; and
reinforcing filler.

7. The rubber composition of claim 6, further comprising an additional rubber comprising natural rubber, synthetic rubber, or combinations thereof.

8. The rubber composition of claim 6 or 7, wherein the reinforcing filler comprises silica, carbon black, or combinations thereof, and the curative comprises sulfur.

9. A method of making a hydrogenated functionalized copolymer comprising:
introducing an anionic polymerization initiator, at least one conjugated diolefin monomer, at least one vinyl monomer, and solvent to a reactor to produce a living copolymer via anionic polymerization;
reacting at least one alkoxysilyl functional group with the living copolymer to produce a functionalized copolymer, wherein the alkoxylsilyl functional group is selected from the group consisting of alkoxysilane compounds, tetraalkoxysilane compounds, alkylalkoxysilane compounds, alkenylalkoxysilane compounds, and halogenoalkoxysilane compounds, wherein the functionalized copolymer has an initial vinyl content from 30% and 60%; and
hydrogenating the functionalized copolymer by mixing the functionalized copolymer with solvent and a hydrogenation catalyst in a hydrogen stream, wherein the hydrogenated functionalized copolymer has a degree of hydrogenation of 90 mol% to 98 mol % as measured using ¹H NMR.

10. The method of claim 9, wherein the hydrogenation catalyst comprises nickel and aluminum, and the anionic polymerization initiator is a lithium catalyst.

11. The method of claim 9 or 10, wherein the hydrogenation catalyst comprises nickel octoate.

12. The method of any of claims 9 to 11, wherein the alkoxysilyl functional group comprises trimethoxysilane, dimethoxysilane, or combinations thereof.

13. The method of any of claims 9 to 12, wherein the functionalized copolymer is a silane functionalized styrene butadiene copolymer.

## Patentansprüche

1. Polymer, umfassend:
ein funktionalisiertes Copolymer, hergestellt durch Copolymerisation von mindestens einem konjugierten Diolefinmonomer und mindestens einem Vinylmonomer, wobei das funktionalisierte Copolymer mindestens eine funktionelle Alkoxysilylgruppe umfasst, wobei die funktionelle Alkoxysilylgruppe ausgewählt ist aus der Gruppe bestehend aus Alkoxysilanverbindungen,
Tetraa|koxysilanverbindungen, Alkylalkoxysilanverbindungen, Alkenylalkoxysilanverbindungen und Halogenalkoxysilanverbindungen,
wobei das funktionalisierte Copolymer einen unter Verwendung von Protonen-Kernspinresonanzspektroskopie (¹H-NMR) gemessenen Hydrierungsgrad von 90 Mol-% bis 98 Mol-% aufweist, und
wobei das funktionalisierte Copolymer einen anfänglichen Vinylgehalt von 30 % bis 60 % aufweist.

2. Polymer nach Anspruch 1, wobei das konjugierte Diolefinmonomer 1,3-Butadien, Isopren, Myrcen oder Kombinationen davon umfasst, und wobei das Vinylmonomer Styrol, alpha-Methylstyrol oder Kombinationen davon umfasst, und die Siliziumdioxid-reaktiven Einheiten eine oder mehrere Gruppen umfassen, ausgewählt aus Alkoxysilyl-, Hydroxyl-, Polyalkylenglykol-, Silanol-, Silylhalogenid-, Anhydrid-, organischen Säure-, Epoxygruppen und Kombinationen davon.

3. Polymer nach einem der vorstehenden Ansprüche, wobei die funktionelle Gruppe Industrieruß-reaktive Einheiten umfasst.

4. Polymer nach einem der vorstehenden Ansprüche, wobei die funktionelle Alkoxysilylgruppe Trimethoxysilan, Dimethoxysilan oder Kombinationen davon umfasst.

5. Polymer nach einem der vorstehenden Ansprüche, wobei das funktionalisierte Copolymer ein silanfunktionalisiertes Styrol-Butadien-Copolymer ist.

6. Kautschukzusammensetzung, umfassend:
das Polymer nach einem der vorstehenden Ansprüche;
mindestens ein Härtungsmittel; und
verstärkenden Füllstoff.

7. Kautschukzusammensetzung nach Anspruch 6, ferner umfassend einen zusätzlichen Kautschuk, der Naturkautschuk, Synthesekautschuk oder Kombinationen davon umfasst.

8. Kautschukzusammensetzung nach Anspruch 6 oder 7, wobei der verstärkende Füllstoff Siliziumdioxid, Industrieruß oder Kombinationen davon umfasst und das Härtungsmittel Schwefel umfasst.

9. Verfahren zur Herstellung eines hydrierten funktionalisierten Copolymers, umfassend:
Einbringen eines anionischen Polymerisationsinitiators, mindestens eines konjugierten Diolefinmonomers, mindestens eines Vinylmonomers und eines Lösungsmittels in einen Reaktor, um ein lebendes Copolymer durch anionische Polymerisation herzustellen;
Umsetzen mindestens einer funktionellen Alkoxysilylgruppe mit dem lebenden Copolymer, um ein funktionalisiertes Copolymer herzustellen, wobei die funktionelle Alkoxysilylgruppe ausgewählt ist aus der Gruppe bestehend aus Alkoxysilanverbindungen, Tetraalkoxysilanverbindungen, Alkylalkoxysilanverbindungen, Alkenylalkoxysilanverbindungen und Halogenalkoxysilanverbindungen, wobei das funktionalisierte Copolymer einen anfänglichen Vinylgehalt von 30 % und 60 % aufweist; und
Hydrieren des funktionalisierten Copolymers durch Mischen des funktionalisierten Copolymers mit Lösungsmittel und einem Hydrierungskatalysator in einem Wasserstoffstrom, wobei das hydrierte funktionalisierte Copolymer einen unter Verwendung von ¹H-NMR gemessenen Hydrierungsgrad von 90 Mol-% bis 98 Mol-% aufweist.

10. Verfahren nach Anspruch 9, wobei der Hydrierungskatalysator Nickel und Aluminium umfasst und der anionische Polymerisationsinitiator ein Lithiumkatalysator ist.

11. Verfahren nach Anspruch 9 oder 10, wobei der Hydrierungskatalysator Nickeloctoat umfasst.

12. Verfahren nach einem der Ansprüche 9 bis 11, wobei die funktionelle Alkoxysilylgruppe Trimethoxysilan, Dimethoxysilan oder Kombinationen davon umfasst.

13. Verfahren nach einem der Ansprüche 9 bis 12, wobei das funktionalisierte Copolymer ein silanfunktionalisiertes Styrol-Butadien-Copolymer ist.

## Revendications

1. Polymère comprenant :
un copolymère fonctionnalisé produit par copolymérisation d'au moins un monomère dioléfinique conjugué et d'au moins un monomère vinylique, le copolymère fonctionnalisé comprenant au moins un groupe fonctionnel alcoxysilyle, le groupe fonctionnel alcoxysilyle étant choisi dans le groupe constitué de composés alcoxysilane, composés tétra-alcoxysilane, composés alkylalcoxysilane, composés alcénylalcoxysilane, et composés halogéno-alcoxysilane,
dans lequel le copolymère fonctionnalisé a un degré d'hydrogénation de 90 % molaires à 98 % molaires tel que mesuré en utilisant une spectroscopie à résonance magnétique nucléaire protonique (¹H RMN), et
dans lequel le copolymère fonctionnalisé a une teneur initiale en vinyle de 30 % à 60 %.

2. Polymère selon la revendication 1 dans lequel le monomère dioléfinique conjugué comprend 1,3-butadiène, isoprène, myrcène, ou des combinaisons de ceux-ci, et dans lequel le monomère vinylique comprend styrène, alpha-méthylstyrène, ou des combinaisons de ceux-ci, et les fragments réactifs de silice comprennent un ou plusieurs groupes choisis parmi alcoxysilyle, hydroxyle, polyalkylène glycol, silanol, halogénure de silyle, anhydride, acide organique, groupes époxy et des combinaisons de ceux-ci.

3. Polymère selon une quelconque revendication précédente dans lequel le groupe fonctionnel comprend des fragments réactifs de noir de carbone.

4. Polymère selon une quelconque revendication précédente, dans lequel le groupe fonctionnel alcoxysilyle comprend triméthoxysilane, diméthoxysilane, ou des combinaisons de ceux-ci.

5. Polymère selon une quelconque revendication précédente, dans lequel le copolymère fonctionnalisé est un copolymère styrène-butadiène à fonctionnalisation silane.

6. Composition de caoutchouc comprenant :
le polymère selon une quelconque revendication précédente ;
au moins un agent de durcissement ; et
une charge renforçante.

7. Composition de caoutchouc selon la revendication 6, comprenant en outre un caoutchouc supplémentaire comprenant du caoutchouc naturel, du caoutchouc synthétique, ou des combinaisons de ceux-ci.

8. Composition de caoutchouc selon la revendication 6 ou 7, dans laquelle la charge renforçante comprend de la silice, du noir de carbone, ou des combinaisons de ceux-ci, et l'agent de durcissement comprend du soufre.

9. Procédé de fabrication d'un copolymère fonctionnalisé hydrogéné comprenant :
l'introduction d'un initiateur de polymérisation anionique, d'au moins un monomère dioléfinique conjugué, d'au moins un monomère vinylique, et de solvant à un réacteur pour produire un copolymère vivant par l'intermédiaire d'une polymérisation anionique ;
la réaction d'au moins un groupe fonctionnel alcoxysilyle avec le copolymère vivant pour produire un copolymère fonctionnalisé, dans lequel le groupe fonctionnel alcoxysilyle est choisi dans le groupe constitué de composés alcoxysilane, composés tétra-alcoxysilane, composés alkylalcoxysilane, composés alcénylalcoxysilane et composés halogéno-alcoxysilane, dans lequel le copolymère fonctionnalisé a un teneur initiale en vinyle de 30 % et 60 % ; et
l'hydrogénation du copolymère fonctionnalisé en mélangeant le copolymère fonctionnalisé avec du solvant et un catalyseur d'hydrogénation dans un courant d'hydrogène, dans lequel le copolymère fonctionnalisé hydrogéné a un degré d'hydrogénation de 90 % molaires à 98 % molaires tel que mesuré en utilisant une ¹H RMN.

10. Procédé selon la revendication 9, dans lequel le catalyseur d'hydrogénation comprend du nickel et de l'aluminium, et l'initiateur de polymérisation anionique est un catalyseur au lithium.

11. Procédé selon la revendication 9 ou 10, dans lequel le catalyseur d'hydrogénation comprend de l'octoate de nickel.

12. Procédé selon l'une quelconque des revendications 9 à 11, dans lequel le groupe fonctionnel alcoxysilyle comprend du triméthoxysilane, du diméthoxysilane, ou des combinaisons de ceux-ci.

13. Procédé selon l'une quelconque des revendications 9 à 12, dans lequel le copolymère fonctionnalisé est un copolymère styrène-butadiène à fonctionnalisation silane.
